# EUROPÄISCHE PATENTANMELDUNG

(11) **EP 1 467 112 A2**
(43) Veröffentlichungstag der Anmeldung: **13.10.2004**
(21) Anmeldenummer: 04007231.6
(22) Anmeldetag: 25.03.2004
(51) Int. Cl.: F16D 27/00

(54) **Vorrichtung zum Ausrücken einer Kupplung**

(30) Priorität: 10.04.2003 DE 10316448
(71) Anmelder: Robert Bosch GmbH, 70442 Stuttgart (DE)
(72) Erfinder: Aschoff, Joerg, 77815 Buehl (DE)

(57) **Zusammenfassung**

Die Erfindung bezieht sich auf eine Vorrichtung zur Betätigung einer Kupplung (41). Die Kupplung (41) ist einem Fahrzeuggetriebe (40) zugeordnet. Die Kupplung (41) weist einen Zentralausrücker (45) auf, der mittels eines elektrischen Antriebes (44) betätigbar ist und an dem ein untersetzendes Getriebe (2) vorgesehen ist. Dieses umfasst ein an einer Getriebewelle (16) aufgenommenes Getriebeelement (17, 31), welches in axiale Richtung bewegbar ist. Das axial bewegbare Getriebeelement (17, 31) wirkt über ein Stellglied (13) auf ein Ausrücklager (12) der Kupplung (41) ein. Der Zentralausrücker (45) ist zentral innerhalb einer Kupplungsglocke (42) der Kupplung (41) angeordnet, auf der Getriebewelle (16) montiert. Der den Zentralausrücker (45) betätigende elektrische Antrieb (44) ist außerhalb der Kupplungsglocke (42) aufgenommen und über eine Übertragungsstrecke (43) vom Fahrzeuggetriebe (40) und der Kupplung (41) räumlich entkoppelt.

## Beschreibung

### Technisches Gebiet

Im Triebstrang eines Automobiles sind Getriebe und Kupplungselemente aufgenommen, um die charakteristischen Werte von Leistung und Drehmoment einer Verbrennungskraftmaschine in optimaler Weise zur Verfügung zu stellen. Übersetzungen in den Antriebsaggregaten sorgen dafür, dass das Drehmomentangebot und der jeweilige Zugkraftbedarf aneinander angeglichen werden können. Zur Kraftübertragung durch Kupplungen werden eine oder mehrere Kupplungsscheiben mittels Federn vorgespannt. Zum Öffnen, zum Beispiel zum Durchführen eines Schaltvorganges, entlastet ein mechanisch-hydraulisch betätigtes Ausrücklager die Druckplatte von dem Federelement. Die Kupplung wird mit einem Fußpedal oder mit Stellern (elektrohydraulisch, elektropneumatisch oder elektromechanisch) betätigt.

### Stand der Technik

Für Kraftfahrzeugantriebe mit einer Brennkraftmaschine und einem voll oder teilweise automatisch schaltbaren mechanischen Schaltgetriebe, werden Vorrichtungen zum Betätigen einer Kupplung verwendet, die einen elektronisch ansteuerbaren Kupplungssteller besitzen. Die Kupplung bzw. die Kupplungen können zum Anfahren des Fahrzeuges oder zum Schalten des Getriebes eingesetzt werden.

Aus US 5,441,462 ist ein Kraftfahrzeugantrieb bekannt, bei dem eine elektronische Steuereinheit einen Kupplungssteller in Abhängigkeit von Betriebsparametern und Fahrparametern ansteuert.

WO 02/50444 A1 bezieht sich auf eine Vorrichtung zum Betätigen einer Kupplung. Die Kupplung, die insbesondere bei Kraftfahrzeugantrieben eingesetzt werden kann, umfasst ein elektronisch ansteuerbaren Kupplungssteller, der einen Elektromotor und ein untersetzendes Stellgetriebe mit zwei koaxial zueinander angeordneten Getriebeelementen umfasst. Diese sind über ein Gewinde triebmäßig miteinander verbunden und verstellen sich bei einer relativen Drehung zueinander axial. Ein Gehäuse des Kupplungsstellers ist axial fixiert, wobei die Stellbewegung des anderen Getriebeelementes auf ein Ausrücklager einer Kupplungsscheibe übertragen wird. Das relativ zum Gehäuse axial verschiebbare Getriebeelement ist in einer Längsführung drehfest, jedoch axial verschiebbar angeordnet und mit einem Rotor bzw. einer Motorwelle des Elektromotors verbunden und wirkt über ein Stellglied auf das Ausrücklager ein.

WO 01/03984 A1 umfasst einen Antrieb zur Umformung einer Rotationsbewegung in eine Axialbewegung. Die Federspindel setzt sich im Wesentlichen aus einem Bauteil mit der drehfest mit diesem verbundenen Schraubenfeder und einem Bauteil mit den von radial innen in die Schraubenfeder eingreifenden Eingriffsmitteln zusammen, die aus einem Satz über den Umfang verteilter Stifte gebildet werden. Die Stifte stehen ihrerseits mit einem Federband mittels eines Wälzlagers in axialem Kontakt, wobei das Wälzlager auf den Stiften positioniert ist. Ein Satz Stifte wird für die Schubrichtung und ein Satz der Stifte für die Zugrichtung des Axialantriebes verwendet. Die beiden Stiftsätze können jeweils in Umfangsrichtung gewindeartig an den Verlauf des Federbandes angepasst sein, so dass das Federband in jedem Umfangsabschnitt spielfrei abgestützt ist. Die Stiftsätze sind gegeneinander vorzugsweise um eine Federbandbreite axial versetzt und an einem Längsende innerhalb des Bauteiles und am anderen Ende über Stege mit dem Bauteil fest verbunden.

EP 1 106 877 A1 offenbart eine Einrichtung zur servounterstützten Betätigung eines Fahrzeuggetriebes. Es werden Betätigungseinrichtungen offenbart, die eine kombinierte Bewegung eines Paares mechanischer Stellglieder eines Getriebes bewirken, wobei diese zur Auswahl und zum Einlegen eines Ganges dienen. Damit lassen sich die Gänge eines Getriebes abhängig von der Position eines Schalthebels einlegen. Die Betätigungseinrichtung ist räumlich entfernt zum Getriebe angeordnet und über mechanische Übertragungselemente in Form länglicher Schubstangen ausgebildet.

### Darstellung der Erfindung

Elektrische Zentralausrücker für Fahrzeugkupplungen waren, bisher mit dem Nachteil behaftet, dass die zu deren Betätigung erforderliche elektrische Leistung in dem außerordentlich begrenzten Bauraum schwierig unterzubringen ist, wobei hinsichtlich der Temperatur und der Verschmutzung zudem widrige äußere Einsatzbedingungen gegeben sind. Durch die erfindungsgemäß vorgeschlagene Lösung ist der Einsatz eines elektromotorisch angetrieben Zentralausrückers für eine Fahrzeugkupplung unter Umgehung der ungünstigen Umgebungsbedingungen und Ausnutzung des gesamten zur Verfügung stehenden Bauraumes möglich. Mittels einer räumlichen Trennung des elektrischen Antriebes und des Ausrückmechanismus voneinander, lässt sich der elektrische Antrieb und eine notwendige Sensorik außerhalb des Bereiches anordnen, in welchem extrem hohe Temperaturen auftreten.

Zudem ist der elektrische Antrieb besser gegen Verschmutzung und von außen eindringende Feuchtigkeit abdichtbar. Der Ausrückmechanismus der Fahrzeugkupplung lässt sich hinsichtlich der Auslegung von Gewinde, Kugelgewinde und eventuell erforderlicher Bandschraubgetriebe kompakter bauen, da eine zusätzliche Übersetzung in eine Übertragungsstrecke, d. h. außerhalb des eigentlichen Ausrückmechanismus verlegt werden kann. Der Ausrückmechanismus kann für verschiedene Anwendungen individuell unter Rückgriff auf das Baukastenprinzip variiert werden. Damit lässt sich eine hydraulische Betätigung des Zentralausrückers umgehen. Ein elektromotorisch angetriebener Zentralausrücker weist überdies den Vorteil auf, dass neben einem Verschieben der Kupplung auch an der Kupplungsscheibe gezogen, d. h. eine weitere Bewegungsrichtung sehr einfach realisiert werden kann. Bei Einsatz eines flexiblen Übertragungselementes, wie beispielsweise einer flexiblen Welle, kann der Antriebsmotor entfernt vom Fahrzeuggetriebe montiert werden, wodurch die von diesem auf den Ausrücker wirkenden Vibrationen wesentlich reduziert werden können. In einem drehfesten aber über die Länge flexiblem Schutzrohr ist ein verdrehbare aber torsionssteife Seele untergebracht, über welche eine Drehbewegung weitergeleitet werden kann. Zur Reduzierung der Motorleistung des elektrischen Antriebes lässt sich zudem eine direkt wirkende Kompensationsfeder einsetzen. Wird darüber hinaus eine selbsthemmende Schneckenstufe vorgeschaltet, kann das Haltemoment des Antriebsmotors erheblich reduziert werden, wodurch dessen Lebensdauer nicht unerheblich erhöht werden kann.

Aufgrund der durch die gewählte Anordnung entfallenden Bauraumbeschränkungen wird in einer Kupplungsglocke der Einsatz eines kostengünstigeren Antriebsmotors mit einer geringeren Leistungsdichte möglich. Es bietet sich an, den elektrischen Antrieb zur Betätigung des Ausrückmechanismus als DC-Motor oder als EC-Motor mit Ferrit auszubilden. EC-Motoren, die kostengünstig unter Einsatz von Ferrit-Magneten aufgebaut sind, lassen sich in vorteilhafter Weise aufgrund der durch die erfindungsgemäße Lösung entfallenen Bauraumbeschränkungen einsetzen. EC-Motoren, die mit hoher Leistungsdichte aufgebaut werden und bei beschränktem Bauraum verwendet werden, weisen Seltene-Erden-Magneten (NdFeB) auf, die jedoch wesentlich teurer sind als herkömmliche Magnete aus Ferrit. Daher bietet der Einsatz von EC-Motoren mit Ferritmagneten, der durch die erfindungsgemäße Lösung ermöglicht wird, eine wesentlich preisgünstigere Alternative.

### Zeichnung

Anhand der Zeichnung wird die vorliegende Erfindung nachstehend eingehender beschrieben.

Es zeigt:
- Figur 1: eine erste Ausführungsvariante eines mechanischen Zentralausrückers,
- Figur 2: eine weitere Ausführungsvariante eines mechanischen Zentralausrückers,
- Figur 2.1: eine Detaildarstellung des Ausrücklagers zur Übertragung von Zug- und Druckkräften,
- Figur 3: eine dritte Ausführungsmöglichkeit eines mechanischen Zentralausrückers,
- Figur 4: eine Einbauvariante eines Antriebsmotors in Querrichtung zur Betätigung eines Ausrückmechanismus,
- Figur 5: ein achsparallele Anordnung eines Antriebsmotors mit einem Stirnrad- oder Zugmittelgetriebe und
- Figur 6: eine achsparallele, vom Fahrzeuggetriebe entkoppelte Anordnung eines Ausrückmotors.

### Ausführungsvarianten

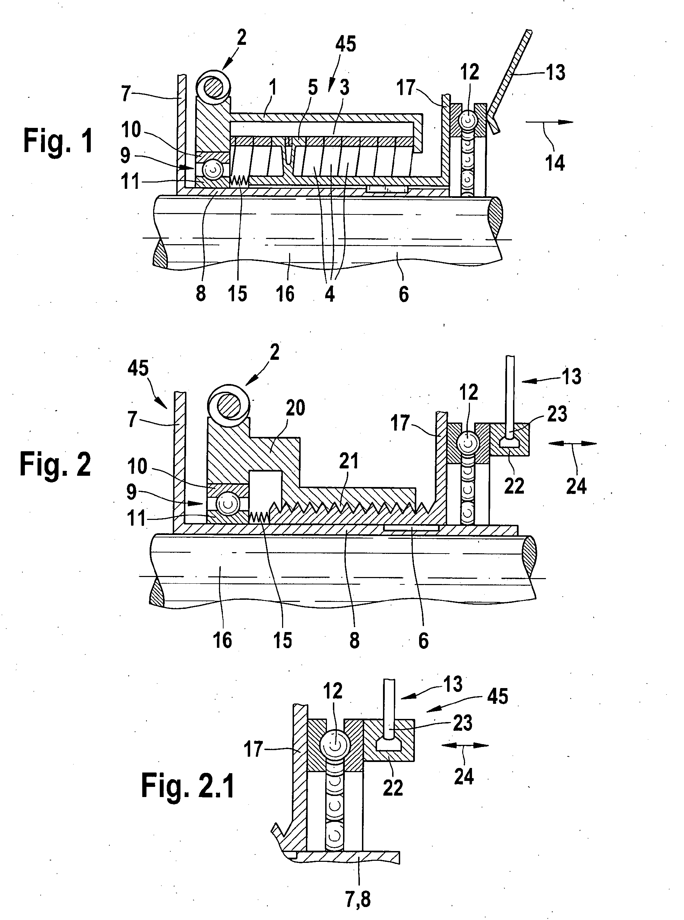

Fig. 1 ist eine erste Ausführungsvariante eines mechanischen Zentralausrückers zu entnehmen.

Der in Fig. 1 dargestellte mechanische Teil eines Zentralausrückers 45 ist innerhalb einer nicht dargestellten Kupplungsglocke konzentrisch zu einer Getriebewelle 16, über einen Flansch am Getriebegehäuse befestigt. Eine Getriebewelle 16 ragt mit Spiel durch eine Flanschhülse 8. Der in Fig. 1 dargestellte mechanische Teil des Zentralausrückers 45 wird über ein Schneckengetriebe 2 angetrieben, dessen Schneckenrad mit Bezugzeichen 1 gekennzeichnet ist. Innerhalb des Scheckenrades ist ein Schraubenband 3 aufgenommen, welches mehrere Einzelwindungen 4 aufweist. Die Einzelwindungen 4 des Schraubenbandes 3 verhalten sich wie Gewindegänge einer Schraube. Das vom Schneckenrad 1 des Schneckengetriebes 2 umschlossene Schraubenband 3 umgibt sowohl eine Schiebehülse 17 als auch einen zwischen der Getriebewelle 16 und der Schiebehülse 17 angeordneten Flansch 7. Der Flansch 7 umfasst die Flanschhülse 8, auf welcher die in axiale Richtung verschiebbare Schiebehülse 17 einerseits und ein Radiallager 9 andererseits aufgenommen sind. Auf dem Radiallager 9, welches in der Ausführungsvariante des mechanischen Teils des Zentralausrückers 45 gemäß Fig. 1 als Kugellager ausgebildet ist, ist das Schneckenrad 1, welches über eine in Fig. 1 nicht dargestellte Schnecke angetrieben wird, verdrehbar aufgenommen. Das Radiallager 9 umfasst einen Innenring 11 sowie einen Außenring 10. Der Innenring 11 ist auf der äußeren Mantelfläche der Flanschhülse 8 aufgenommen, während der Außenring 10 des Radiallagers 9 das Schneckenrad 1 des Schneckengetriebes 2 abstützt. Zwischen dem Innenring 11 des Radiallagers 9 und einer dem Radiallager 9 zuweisenden Stirnseite der Schiebehülse 17, ist eine Kompensationsfeder 15 - hier als Spiralfeder ausgebildet - aufgenommen.

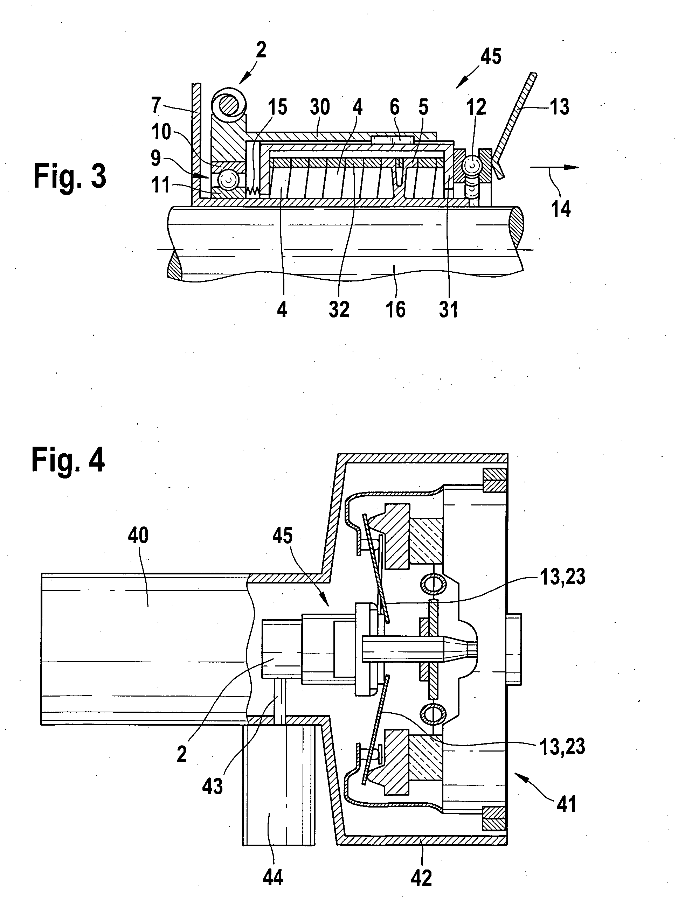

Auf der Flanschhülse 8 des Flansches 7 ist über das Radiallager 9 das Schneckenrad 1 drehbar angeordnet, an dessen ringförmig konfigurierten Ansatz das Schraubenband 3 drehgesichert angeordnet ist. Durch Verdrehen des Schneckenrades 1 des Schneckengetriebes 2 über einen in den Fig. 4, 5 und 6 dargestellten elektrischen Antriebsmotor 44, 47, wird aufgrund der drehgesicherten Anordnung des Schraubenbandes 3 eine Schiebehülse 17 in axiale Richtung verschoben. Die Schiebehülse 17 ist durch die Axialführung 6, die beispielsweise als Passfeder ausgebildet sein kann, am Drehen gehindert. Mit dem Außenumfang der Schiebehülse 17 ist ein Übertragungselement 5 fest verbunden. Das Übertragungselement 5, welches beispielsweise dornförmig ausgebildet sein kann, greift in einen oder mehrere Schlitze, welche in den Einzelwindungen 4 des Schraubenbandes 3 vorgesehen sind, ein. Bei einem Verdrehen des Schraubenbandes 3 aufgrund einer Drehbewegung des auf dem Radiallager 9 drehbar gelagerten Schneckenrades 1, verhalten sich die Einzelwindungen 4 des Schraubenbandes 3 wie Gewindegänge, in denen das Übertragungselement 5 in axiale Richtung weitergeführt wird. Die aufgrund der Führung des Übertragungselementes 5 in den Einzelwindungen 4 des Schraubenbandes 3 verursachte Axialbewegung wird über ein an der Schiebehülse 17 vorgesehenes Ausrücklager 12 auf einen Ausrückmechanismus 13 einer in Fig. 1 nicht dargestellten Fahrzeugkupplung übertragen. Die zwischen der in axiale Richtung verschiebbaren Schiebehülse 17 und dem Innenring 11 des Radiallagers 9 aufgenommene Kompensationsfeder 15, reduziert die einseitig wirkende Ausrückkraft der Kupplung und damit die Antriebsleistung des Antriebsmotors 44, 47 (vgl. Fig. 4, 5 und 6) für den Zentralausrücker 45, der seinerseits das Schneckengetriebe 2 antreibt.

Aufgrund der in axiale Richtung erfolgenden Schiebebewegung der Schiebehülse 17 wird das Ausrücklager 12 in Ausrückrichtung 14 an einem Hebelelement eines in Fig. 1 nur schematisch angedeuteten Ausrücklager 12 in Ausrückrichtung 14 an eine Federzunge 13 einer Kupplungsdruckfeder (Tellerfeder) angestellt, die ihrerseits einen Druckteller der Kupplung von einer Kupplungsglocke trennt.

Fig. 2 ist eine weitere Ausführungsvariante eines mechanischen Teils eines erfindungsgemäßen Zentralausrückers zwischen Fahrzeuggetriebe und Fahrzeugkupplung zu entnehmen.

Aus der Darstellung gemäß Fig. 2 geht hervor, dass bei dieser Ausführungsvariante des mechanischen Teils des Zentralausrückers 45 die Axialbewegung über Gewindeabschnitte erzeugt wird, die das in der Ausführungsvariante gemäß Fig. 1 dargestellte Schraubenband 3 ersetzen. Dazu umfasst das Schneckengetriebe 2, welches über den hier nicht dargestellten Antriebsmotors 44, 47 (vgl. Darstellung gemäß der Fig. 4, 5 und 6) angetrieben wird, eine Innenverzahnung 21, die mit einem an der Umfangsfläche der Schiebehülse 17 vorgesehenem Außengewindeabschnitt 21 kämmt und demzufolge über ein Kugelgewinde oder ein konventionelles symmetrisches Gewinde, der Schiebehülse 17 eine Axialbewegung aufprägt. Gemäß dieser Ausführungsvariante ist die in axiale Richtung bewegbare Schiebehülse 17 ebenfalls auf dem Flansch 7, der die Flanschhülse 8 enthält, aufgenommen. Auf der Flanschhülse 8 des Flansches 7 ist des weiteren das Radiallager 9 aufgenommen, auf dessen Außenring 10 das Schneckenrad 20 mit Innenverzahnung drehbar gelagert ist. Zwischen dem Innenring 11 des Radiallagers 9 und der dem Radiallager 9 zuweisenden Stirnseite der Schiebehülse 17 ist die in der Ausführungsvariante gemäß Fig. 1 ebenfalls vorgesehene Kompensationsfeder 15 angeordnet, über welche die einseitig wirkende Ausrückkraft der Kupplung reduziert wird und die Antriebsleistung des elektrischen Antriebsmotors 44, 47 zur Erzeugung einer Axialbewegung zwischen Flansch 7, 8 und Schiebehülse 17 reduziert werden kann.

An der Schiebehülse 17 ist das Ausrücklager 12 der Fahrzeugkupplung befestigt, welches in der Darstellung gemäß Fig. 2 als Axial-Kugellager beschaffen ist. An einem Laufring des Ausrücklagers 12 befindet sich ein Käfig 22, in welchem ein Ausrückhebelende 23 des Ausrückmechanismus 13 der Fahrzeugkupplung eingreift. Mit der in Fig. 2 dargestellten Ausführungsvariante eines Zentralausrückers 45 können beidseitige Bewegungen - angedeutet durch den Doppelpfeil 24 - ausgeführt werden, d. h. die Schiebehülse 17 mit daran befestigtem Ausrücklager 12 kann über den Käfig 22 an den Ausrückmechanismus 13 der Fahrzeugkupplung sowohl Druck als auch Zugkräfte übertragen. Zur Übertragung von Zugkräften ist ein Zusammenhalt der Laufringe bei speziellen Lagerbauformen gewährleistet.

Auch gemäß der in Fig. 2 dargestellten Ausführungsvariante des mechanischen Teils des Zentralausrückers 45 ist dieser über den Flansch 7 am Getriebegehäuse befestigt, wobei die Getriebewelle 16 die Flanschhülse 8 mit Spiel durchragt.

Die am Außenumfang der Flanschhülse 8 ausgebildete Axialführung 6 ist in diesem Falle nicht wirksam, um eine Drehbewegung der Schiebehülse 17 auf der Umfangsfläche der Flanschhülse 8 bei Verdrehung des mit einer Innenverzahnung versehenen Schneckenrades 20 zu ermöglichen.

Der Darstellung gemäß Fig. 2.1 ist eine Detaildarstellung des Ausrücklagers zur Übertragung von Zug- und Druckkräften in vergrößertem Maßstab zu entnehmen.

An einer Stirnseite der auf dem Flansch 7 mit Flanschhülse 8 axial verschiebbar aufgenommen Schiebehülse 17 ist das Ausrücklager 12 befestigt. Das Ausrücklager 12 kann beispielsweise als ein Kugellager beschaffen sein, welches einen Innenring und einen Außenring umfasst. Der Innenring des Kugellagers ist an der verschiebbaren Schiebehülse 17 gelagert. Am Außenring des Ausrücklagers 12 befindet sich ein Käfig 22, der an einer Außeriseite eine Öffnung aufweist, in die das Ausrückhebelende 23 des Ausrückmechanismus 13 der Fahrzeugkupplung eingreift. Aufgrund der Axialbewegbarkeit der Verschiebehülse 17 in beide Richtungen gemäß des Doppelpfeiles 24, ist mittels der in Fig. 2.1 in vergrößertem Maßstab dargestellten Ausrückmechanismuslagerung eine Übertragung sowohl von Druck- als auch von Zugkräften möglich.

Der Fig. 3 geht eine dritte Ausführungsvariante eines Zentralausrückers hervor, der ebenfalls über ein Schneckengetriebe angetrieben ist.

Der Zentralausrücker 45 gemäß dieser Ausführungsvariante umfasst ein Schneckenrad 30, an dessen ringförmigen Ansatz, der sich parallel zur Getriebewelle 16 erstreckt, eine Axialführung 6 ausgebildet ist. Gemäß dieser Ausführungsvariante werden die in axiale Richtung wirksamen Ausrückkräfte nicht über das Radiallager 9 aufgenommen. Gemäß dieser Ausführungsvariante ist die Schiebehülse als eine in radiale und axiale Richtung verschiebbare Schiebehülse 31 ausgebildet und vom ringförmigen Ansatz des Schneckenrades 30 umschlossen. Innerhalb der radial und axial beweglichen Schiebehülse 31 ist das mehrere Einzelwindungen 4 aufweisende Schraubenband 32 verdrehgesichert aufgenommen. Am Außenumfang der Flanschhülse 8 des Flansches 7 befindet sich das Übertragungselement 5, welches analog zu der in Fig. 1 dargestellten ersten Ausführungsvariante des erfindungsgemäßen Zentralausrückers 45 in schlitzförmig konfigurierte Öffnungen der Einzelwindungen 4 des verdrehgesicherten Schraubenbandes 32 eingreift. Gemäß dieser in Fig. 3 dargestellten Ausführungsvariante des mechanischen Teils des Zentralausrückers 45 wird die Drehbewegung des Schneckenrades 30 mit Axialführung durch diese auf die radial und axial bewegliche Schiebehülse 31 übertragen. Das in die schlitzförmigen Öffnungen der Einzelwindungen 4 des verdrehgesicherten Schraubenbandes 32 eingreifende Übertragungselement 5, ist seinerseits ortsfest auf der Flanschhülse 8 des Flansches 7 angeordnet.

Das Schraubenband 32 ist in der Schiebehülse 31 drehfest und in axiale Richtung fixiert aufgenommen. Das Übertragungselement 5 ist ortsfest auf der Flanschhülse 8 aufgenommen. Die Schiebehülse 31 und das Schraubenband 32 werden über die Axialführung durch das Schneckenrad 1 verdreht und führen dadurch eine axiale Bewegung aus.

An der entfernt vom Schneckengetriebe 2 liegenden Stirnseite ist an der radial und axial beweglichen Schiebehülse 31 das Ausrücklager 12 aufgenommen. Analog zu den bisher dargestellten Ausführungsvarianten des Ausrücklagers 12, umfasst dieses einen Innenring und einen Außenring, wobei der Außenring des Ausrücklagers 12 auf einen Ausrückmechanismus 13 - schematisch in Fig. 3 durch eine Federzunge der Kupplungsdruckfeder (Tellerfeder) angedeutet - einwirkt. Aufgrund der Axialbewegung der vom Schneckenrad 30 mit Axialführung umgebenen Schiebehülse 31 wird dem Ausrückmechanismus 13, der als Ausrückhebel beschaffen sein kann, eine in Ausrückrichtung 14 wirkende Kraft aufgeprägt, welche zum Betätigen der Kupplung 41 zur Trennung des Triebstranges vom Fahrzeuggetriebe dient.

Aus der Darstellung gemäß Fig. 4 geht eine Einbauvariante eines Antriebsmotors zur Betätigung des Ausrückmechanismus einer Fahrzeugkupplung hervor.

Ein Fahrzeuggetriebe 40, welches in der Darstellung gemäß Fig. 4 nur schematisch angedeutet ist, ist über eine Kupplung 41 mit dem in Fig. 4 nicht dargestellten Triebstrang eines Fahrzeuges, wobei es sich um einen Personenkraftwagen oder um ein Nutzfahrzeug handeln kann, kuppel- bzw. entkuppelbar. Die Fahrzeugkupplung 41 ist von einer Kupplungsglocke 42 umgeben, innerhalb der sowohl der Zentralausrücker 45 als auch das in den Fig. 1 bis 3 dargestellte Schneckengetriebe 2 aufgenommen sind. Der Antrieb des Schneckengetriebes 2, welches die Scheckenräder 1, 20, 30 umfassen kann (vgl. Ausführungsvarianten gemäß der Fig. 1 bis 3), erfolgt über den seitlich am Fahrzeuggetriebe 40 angeflanschten elektrischen Antrieb 44. Zwischen dem Schneckengetriebe 2 und dem Antriebsmotor 44 kann eine Übertragungsstrecke 43 vorgesehen sein. Das Schneckengetriebe 2 kann einerseits direkt auf der Motorwelle angebracht werden; zur Überbrückung größerer Entfernungen können andererseits auch Zwischenwellen zwischen Motorwelle und Schneckengetriebe 2 eingesetzt werden, die eine Übertragungsstrecke 43 darstellen.

Die seitlich an das Fahrzeuggetriebe 40 angeflanschte Anordnung des elektrischen Antriebsmotors 44 und die zwischen dem Schneckengetriebe 2 und dem elektrischen Antriebsmotor 44 befindliche Übertragungsstrecke 43, erlauben es in vorteilhafter Weise, das eine zusätzliche Übersetzung in die Übertragungsstrecke 43 gelegt werden kann, d. h. in einen außerhalb der Kupplungsglocke 42 liegenden Bereich, in dem niedrigere Temperaturen herrschen. Ferner erlaubt das seitliche Anflanschen des elektrischen Antriebes 44 an das Getriebegehäuse des Fahrzeuggetriebes 40 eine bessere Anpassung der Gewinde, Kugelgewinde bzw. Bandschraubgetriebe des mechanischen Teils des Zentralausrückers 45 gemäß der Ausführungsvarianten, die in den Fig. 1 bis 3 bereits beschrieben wurden. Das seitliche Anordnen des elektrischen Antriebes 44 in Querrichtung, bezogen auf das Fahrzeuggetriebe 40, bietet Baurraumvorteile, weil der für einen konzentrisch innerhalb der Kupplungsglocke 42 angeordneten elektrischen Antrieb 44 erforderliche Bauraum nunmehr zusätzlich für die Auslegung des Zentralausrückers 45 ausgenutzt werden kann. Wird zwischen dem elektrischen Antriebsmotor 44 und dem Zentralausrücker 45 ein selbsthemmendes Schneckengetriebe 2 gemäß der Fig. 1 bis 3 zwischengeschaltet, kann das Haltemoment des elektrischen Antriebs 44 reduziert werden, was durch diesen aufzubringen ist. Dies kommt der Lebensdauer des elektrischen Antriebes 44 in erheblichem Maße zugute. Aufgrund der entfallenen Bauraumbeschränkungen innerhalb der Kupplungsglocke 42, ist der Einsatz eines kostengünstig herstellbaren elektrischen Antriebes 44 mit einer geringeren Leistungsdichte möglich. Der elektrische Antrieb 44 kann daher als DC-Motor oder EC-Motor mit Ferritmagneten ausgeführt sein. Über den Zentralausrücker 45 werden Ausrückhebel 13, 23 zur Betätigung eines Drucktellers der Fahrzeugkupplung 41 betätigt. Obwohl in der Darstellung gemäß Fig. 4 nicht detaillierter dargestellt, kann der Zentralausrücker 45 und dessen Komponenten 13, 23 die in Fig. 2 bzw. 2.1 näher dargestellten Käfige 22 umfassen, in welche die Hebelenden 23 der Ausrückhebel 13 eingreifen. Damit können über den erfindungsgemäß vorgeschlagenen elektrisch angetriebenen Zentralausrücker 45 sowohl Druck- als auch Zugkräfte an die Fahrzeugkupplung 41 übertragen werden.

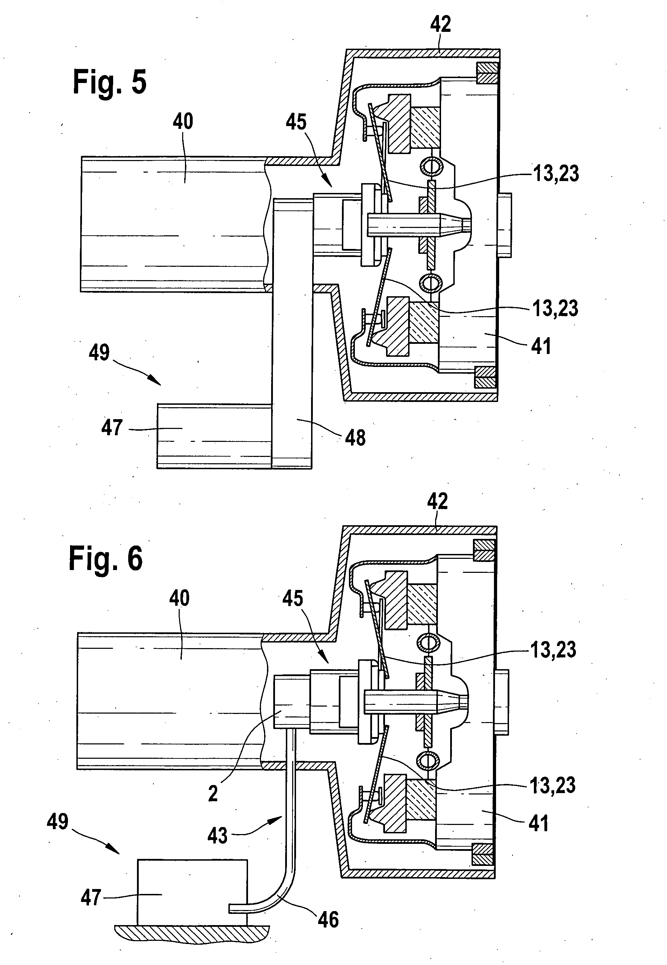

Aus der Darstellung gemäß Fig. 5 geht die achsparallele Anordnung eines Antriebsmotors mit einem Stirnrad- oder Zugmittelgetriebe näher hervor.

Gemäß der in Fig. 5 dargestellten Einbauvariante ist ein elektrischer Antrieb 47 nunmehr in einer achsparallelen Anordnung 49 bezogen auf das Fahrzeuggetriebe 40 angeordnet. Zwischen dem elektrischen Antrieb 47 und dem Zentralausrücker 45 ist ein ein- oder mehrstufig ausgebildetes Stirnrad- bzw. Zugmittelgetriebe 48 geschaltet. In dieser ebenfalls als Übertragungsstrecke 43 anzusehenden Getriebeanordnung 48 können Übersetzungsstufen integriert werden, die die axiale Verschiebbarkeit, d.h. den Axialhub des Zentralausrückers 45 beeinflussen. Auch gemäß dieser Ausführungsvariante ist die Fahrzeugkupplung 41 von der Kupplungsglocke 42 umschlossen. Über den in Fig. 5 schematisch angedeuteten Zentralausrücker 45 werden die einzelnen Ausrückhebel 13 betätigt, deren Ausrückhebelenden 23 entweder in eine Richtung gemäß der in Fig. 1 und 3 dargestellten Ausführungsvariante oder in beide Richtungen 24 über die in den Fig. 2 und 2.1 dargestellten Ausführungsvarianten des Zentralausrückers 45 betätigbar sind. Den Druckteller einer Fahrzeugkupplung 41 betätigende Ausrückhebel 13 sind in der in Fig. 5 dargestellten Einbauvariante angedeutet.

Aus der Darstellung gemäß Fig. 6 geht eine mögliche achsparallele, vom Fahrzeuggetriebe entkoppelte Anordnung eines elektrischen Antriebes des Zentralausrückers einer Fahrzeugkupplung näher hervor.

Achsparallel, d. h. in achsparalleler Anordnung 49 bezogen auf das Fahrzeuggetriebe 40, ist der elektrische Antrieb 47 aufgenommen. Der elektrische Antrieb 47 zur Betätigung des Zentralausrückers 45 ist mittels eines flexibel ausgebildeten Übertragungselementes 46, beispielsweise einer flexiblen Welle mit einem dem Ausrückmechanismus 45 vorgeschalteten Schneckengetriebe 2 verbunden. Aufgrund des Einsatzes des flexiblen Übertragungselementes 46 zwischen dem elektrischen Antrieb 47 und dem Zentralausrücker 45 kann der elektrische Antrieb 47 entkoppelt vom Fahrzeuggetriebe 40 montiert werden, wodurch die aufgrund der sich einstellenden Vibrationen des Fahrzeuggetriebes 40 auftretenden Beanspruchungen des elektrischen Antriebes 47 erheblich reduziert werden. Das flexible Übertragungselement 46 - beispielsweise in Gestalt einer biegsamen Welle - stellt die Übertragungsstrecke 43 zwischen dem elektrischen Antrieb 47 und dem Schneckengetriebe 2 dar, in welche gemäß der obigen Ausführung eine weitere Übersetzungsstufe, entkoppelt vom Fahrzeuggetriebe 40, integriert werden kann.

Die in den Fig. 4, 5 und 6 dargestellten Einbauvarianten eines elektrischen Antriebes 44, 47 außerhalb des Fahrzeuggetriebes 40 und außerhalb der Kupplungsglocke 42 einer Fahrzeugkupplung 41 gestatten es in vorteilhafter Weise, den elektrischen Antrieb 44, 47 sowie eine eventuell zu dessen Betrieb notwendige Sensorik nicht in einem Bereich anzuordnen, in welchem extrem hohe Betriebstemperaturen. Der Zentralausrücker 45 kann für verschiedene Applikationen variiert werden, wobei unter Beibehaltung des Baukastenprinzips der elektrische Antrieb 44 bzw. 47 identisch ausgebildet sein kann. Aufgrund der Konfiguration eines mit dem Ausrücklager 12 zusammenwirkenden Käfigs 22, lassen sich mit dem erfindungsgemäß vorgeschlagenen elektrischen Zentralausrücker 45 sowohl Zug- als auch Druckkräfte an die Fahrzeugkupplung 41 übertragen. Die erfindungsgemäß vorgeschlagene Anordnung eines elektrischen Antriebes 44, 47, entkoppelt und räumlich getrennt von Zentralausrücker 45 der Fahrzeugkupplung 41, gestattet bei Einsatz der in den Fig. 1, 2 und 3 dargestellten Kompensationsfeder 15 eine Reduzierung der Motorleistung des elektrischen Antriebes 44, 47. Wird zudem dem elektrisch angetriebenen Zentralausrücker 45 ein Schneckengetriebe 2 vorgeschaltet, lässt sich das durch den elektrischen Antrieb 44, 47 aufzubringende Haltemoment ebenfalls reduzieren, was eine erhöhte Lebensdauer des elektrischen Antriebes 44, 47 zur Folge hat.

### Bezugszeichenliste

- 1: Schneckenrad
- 2: Schneckengetriebe
- 3: Schraubenband
- 4: Einzelwindung
- 5: Übertragungselement
- 6: Axialführung
- 7: Flansch
- 8: Flanschhülse
- 9: Radiallager
- 10: Außenring
- 11: Innenring
- 12: Ausrücklager
- 13: Ausrückhebel
- 14: Ausrückrichtung
- 15: Kompensationsfeder
- 16: Getriebewelle
- 17: Schiebehülse
- 20: Schneckenrad mit Innenverzahnung
- 21: Gewindeabschnitt Schiebehülse
- 22: Käfig
- 23: Ausrückhebelende
- 24: beidseitige Bewegung (Zug/Druckkraftübertragung)
- 30: Schneckenrad mit integrierter Axialführung
- 31: radial- und axial bewegbare Schiebehülse
- 32: verdrehgesichertes Schraubenband
- 40: Fahrzeuggetriebe
- 41: Fahrzeugkupplung
- 42: Kupplungsglocke
- 43: Übertragungsstrecke
- 44: Antriebsmotor (angeflanscht)
- 45: elektrischer Zentralausrücker
- 46: flexibles Übertragungselement (biegsame Welle)
- 47: Anbauort Antriebsmotor
- 48: Stirnrad-/Zugmittelgetriebe
- 49: achsparallele Anordnung Antriebsmotor

## Patentansprüche

1. Vorrichtung zur Betätigung einer Kupplung (41), welche einem Fahrzeuggetriebe (40) zugeordnet ist und die Kupplung (41) einen Zentralausrücker (45) aufweist, der mittels eines elektrischen Antriebes (44) betätigbar ist sowie ein untersetzendes Getriebe (2) enthält, welches ein in axiale Richtung bewegbares, an einer Getriebewelle (16) aufgenommenes Getriebeelement (17, 31) umfasst, das über ein Ausrücklager (12) und ein Stellglied (13) die Kupplung (41) betätigt, **dadurch gekennzeichnet, dass** der Zentralausrücker (45) zentral innerhalb einer Kupplungsglocke (42) der Kupplung (41) angeordnet, die Getriebewelle (16) mit Spiel umschließend, an einem Getriebegehäuseteil (7) montiert ist und der den Zentralausrücker (45) betätigende elektrische Antrieb (44) außerhalb der Kupplungsglocke (42) aufgenommen und durch eine Übertragungsstrecke (43) vom Fahrzeuggetriebe (40) und der Kupplung (41) entkoppelt ist.

2. Vorrichtung gemäß Anspruch 1, **dadurch gekennzeichnet, dass** das untersetzende Getriebe (2) ein Getriebeelement (1, 20, 30) aufweist, welches über einen Schraubtrieb (3, 5; 31, 5; 21) auf das in axiale Richtung bewegbare Getriebeelement (17, 31) einwirkt.

3. Vorrichtung gemäß Anspruch 1, **dadurch gekennzeichnet, dass** das axial bewegbare Getriebeelement (17, 31) durch eine in Ausrückrichtung (14) der Kupplung (41) wirkende Kompensationsfeder (15) beaufschlagt ist.

4. Vorrichtung gemäß Anspruch 1, **dadurch gekennzeichnet, dass** der Schraubtrieb als ein mehrerer Einzelwindungen (4) aufweisendes Schraubband (3) ausgeführt ist.

5. Vorrichtung gemäß Anspruch 1, **dadurch gekennzeichnet, dass** an dem in axiale Richtung bewegbaren Getriebeelement (17, 31) das Ausrücklager (12) angeordnet ist, welches als Ausrückhebel (13) ausgebildete Stellglieder in Ausrückrichtung (14) betätigt.

6. Vorrichtung gemäß Anspruch 1, **dadurch gekennzeichnet, dass** an dem in axiale Richtung bewegbaren Getriebeelement (17, 31) das Ausrücklager (12) angeordnet ist, an welchem ein Käfig (22) vorgesehen ist, in welchem Enden (23) von Stellgliedern (13 zur Zug- oder Druckkraftübertragung (24) an die Kupplung (41) eingreifen.

7. Vorrichtung gemäß Anspruch 1, **dadurch gekennzeichnet, dass** in die Übertragungsstrecke (43) zwischen dem elektrischen Antrieb (44) und dem Zentralausrücker (45) das untersetzende Getriebe (2) integriert ist.

8. Vorrichtung gemäß Anspruch 7, **dadurch gekennzeichnet, dass** das untersetzende Getriebe (2) als Schnecken- oder als Kegelradgetriebe ausgebildet ist.

9. Vorrichtung gemäß Anspruch 1, **dadurch gekennzeichnet, dass** die Übertragungsstrecke (43) zwischen dem elektrischen Antrieb (44) und dem Zentralausrücker (45) durch ein flexibles Übertragungselement (46) gebildet ist.

10. Vorrichtung gemäß Anspruch 1, **dadurch gekennzeichnet, dass** der elektrische Antrieb (44) in achsparallele Anordnung (49) zum Zentralausrücker (45) der Kupplung (41) aufgenommen ist und die Übertragungsstrecke (43) durch ein ein- oder mehrstufiges Zugmittel- oder Stirnradgetriebe (48) gebildet ist.
